# EUROPÄISCHE PATENTANMELDUNG

(11) **EP 1 529 689 A1**
(43) Veröffentlichungstag der Anmeldung: **11.05.2005**
(21) Anmeldenummer: 04024700.9
(22) Anmeldetag: 16.10.2004
(51) Int. Cl.: B60R 1/02

(54) **Verfahren zur Anzeige des Fahrwegs nachgeschleppter Achsen**

(30) Priorität: 05.11.2003 DE 10351655
(71) Anmelder: DaimlerChrysler AG, 70567 Stuttgart (DE)
(72) Erfinder: Boll, Wolf, Dr., 71384 Weinstadt (DE)

(57) **Zusammenfassung**

Bei einem Verfahren zur Anzeige des Fahrwegs einer von einem ziehenden Fahrzeugteil (2) eines Fahrzeugs (1) nachgeschleppten Achse (5) eines nachgeschleppten Fahrzeugteils (3) bei einer Kurvenfahrt des Fahrzeugs (1), bei dem der Blickwinkel (11) einer Bilderfassungseinrichtung (10) nachgeführt und das erfasste Bild dem Fahrer angezeigt. Die Position und/oder die Schleppkurve (15) der nachgeschleppten Achse (5) wird ermittelt, daraus die notwendige Nachführung des Blickwinkels (11) der Bilderfassungseinrichtung (10) zur Erfassung des Fahrwegs der nachgeschleppten Achse (5) ermittelt und der Blickwinkel (11) entsprechend nachgeführt. Somit wird der Fahrweg der nachgeführten Achse (5) stets erfasst.

## Beschreibung

Die Erfindung betrifft ein Verfahren zur Anzeige des Fahrwegs einer von einem ziehenden Fahrzeugteil eines Fahrzeugs nachgeschleppten Achse eines nachgeschleppten Fahrzeugteils bei einer Kurvenfahrt des Fahrzeugs, bei dem der Blickwinkel einer Bilderfassungseinrichtung nachgeführt und das erfasste Bild dem Fahrer angezeigt wird.

Bei der Kurvenfahrt, insbesondere beim Abbiegen von Fahrzeugen mit einer Zugmaschine, wie einem Lastkraftwagen oder einem Sattelschlepper, und einem davon nachgeschleppten Fahrzeugteil, wie z.B. einem Anhänger oder einem Sattelauflieger, kann der nachgeschleppte Fahrzeugteil aus dem Blickfeld der Rückspiegel gelangen. Der Fahrweg der nachgeschleppten Achse(n) des nachgeschleppten Fahrzeugteils kann daher vom Fahrer nicht immer gesehen werden. Insbesondere können Hindernisse auf dem Fahrweg der nachgeschleppten Achse(n) nicht erkannt werden. Dies gilt im Übrigen auch für den nachgeschleppten Teil von Gelenkbussen.

Es ist denkbar, eine stärkere sphärische Wölbung der Rückspiegel vorzusehen. Dies hat jedoch den Nachteil, dass weit entfernte Objekte sehr klein dargestellt werden und leicht übersehen werden.

Aus der DE 298 18 214 U1 ist eine Seitensichtanlage für Fahrzeuge, insbesondere für Lastkraftwagen, bekannt geworden, die mindestens eine am Fahrzeug befestigte, nach hinten gerichtete Videokamera, mindestens einen Bildschirm zur Wiedergabe der Signale der Videokamera im Sichtfeld des Fahrers sowie eine Einstelleinrichtung für jede Kamera umfasst. Insbesondere ist vorgesehen, dass die Videokamera durch eine Nachführautomatik ergänzt ist. Dadurch kann die Videokamera proportional mit dem Lenkeinschlag nach außen bewegt werden. Diese Anlage stellt jedoch nicht sicher, dass immer der Bereich der nachgeschleppten Achse dargestellt wird. Werden beispielsweise die Räder der Zugmaschine im Stillstand eingeschlagen, wird die Videokamera verschwenkt, obwohl das nachgeschleppte Fahrzeugteil gegenüber dem ziehenden Fahrzeugteil nicht verschwenkt ist.

Aufgabe der vorliegenden Erfindung ist es deshalb, ein Verfahren bereit zu stellen, mit dem der Fahrweg der nachgeschleppten Achse(n) dem Fahrer zuverlässig angezeigt werden kann.

Diese Aufgabe wird erfindungsgemäß durch ein Verfahren der eingangs genannten Art gelöst, bei dem die Position und/oder die Schleppkurve der nachgeschleppten Achse ermittelt wird, daraus die notwendige Nachführung des Blickwinkels der Bilderfassungseinrichtung zur Erfassung des Fahrwegs der nachgeschleppten Achse ermittelt und der Blickwinkel entsprechend nachgeführt wird.

Durch die Ermittlung der Schleppkurve oder der Position und entsprechendes Nachführen des Blickwinkels der Bilderfassungseinrichtung ist sicher gestellt, dass die nachgeschleppte(n) Achse(n) und ihnen möglicherweise im Weg stehende Hindernisse vom Fahrer immer erkannt werden können. Dies stellt eine wesentliche Verbesserung im Vergleich zu aus dem Stand der Technik bekannten Verfahren dar. Vorteilhafterweise sind an beiden Seiten des ziehenden Fahrzeugs, insbesondere in Außenspiegelnähe, Bilderfassungseinrichtungen vorgesehen, so dass bei Kurvenfahrt, sowohl nach links als auch nach rechts, die nachgeschleppte Achse(n) des nachgeschleppten Fahrzeugteils erfasst werden können. Die Position der nachgeschleppten Achse kann dabei absolut ermittelt werden oder in Bezug auf einen Bezugspunkt. Eine solche relative Position kann beispielsweise in Bezug auf die Position der Bilderfassungseinrichtung ermittelt werden.

Bei einer besonders bevorzugten Verfahrensvariante kann vorgesehen sein, dass zur Nachführung des Blickwinkels die Bilderfassungseinrichtung verfahren oder verschwenkt wird. Es kann beispielsweise vorgesehen sein, dass die Bilderfassungseinrichtung entlang einer Führungsschiene, die gebogen sein kann, verfahren wird, je nachdem, was für eine Schleppkurve ermittelt wird. Alternativ oder zusätzlich kann die Bilderfassungseinrichtung schwenkbar angeordnet sein, so dass sie je nach ermittelter Schleppkurve derart verschwenkt wird, dass immer der Fahrweg der nachgeschleppten Achse, und vorzugsweise auch die nachgeschleppte Achse selbst, im Blickwinkel der Bilderfassungseinrichtung liegt.

Bei einer besonders vorteilhaften Verfahrensvariante kann die Schleppkurve und/oder die Position aus dem Lenkwinkel und dem zurück gelegten Weg des ziehenden Fahrzeugteils ermittelt werden. Da im Vergleich zum Stand der Technik auch der zurück gelegte Weg des ziehenden Fahrzeugs berücksichtigt wird, kann es nicht zu einer oben beschriebenen Fehleinstellung der Bilderfassungseinrichtung kommen. Aus dem Lenkwinkel und dem zurück gelegten Weg kann die Schleppkurve besonders einfach ermittelt werden.

Bei einer weiteren Verfahrensvariante kann vorgesehen sein, dass mindestens ein Drehwinkel erfasst wird, der die Verdrehung des die nachgeschleppte Achse aufweisenden Fahrzeugteils zu dem ziehenden Fahrzeugteil angibt, und daraus die Schleppkurve und/oder die Position der nachgeschleppten Achse ermittelt wird. Insbesondere, wenn das ziehende Fahrzeugteil und das nachgeschleppte Fahrzeugteil nur über einen Drehpunkt miteinander verbunden sind, wie dies bei einem Sattelschlepper mit Sattelauflieger der Fall ist, kann aus dem an dem Drehpunkt erfassten Drehwinkel besonders einfach die Position und die Schleppkurve ermittelt werden. Grundsätzlich möglich, jedoch etwas komplizierter, ist die Ermittlung der Schleppkurve auch, wenn der nachgeschleppte Anhänger einen Drehschemel aufweist. In einem solchen Fall bestehen zwei Drehpunkte: an der Stelle, an der der Anhänger an das Zugfahrzeug angekuppelt ist und an der Stelle des Drehschemels. Werden die Drehwinkel an beiden Drehpunkten erfasst, kann die Schleppkurve ermittelt werden.

Die Aufgabe wird außerdem gelöst durch eine Einrichtung zur Darstellung des Fahrwegs einer nachgeschleppten Achse eines durch einen ziehenden Fahrzeugteil nachgeschleppten Fahrzeugteils eines Fahrzeugs, umfassend eine nachführbare Bilderfassungseinrichtung und eine damit verbundene Anzeigeeinrichtung, wobei eine Steuereinrichtung zum Ermitteln einer Schleppkurve und/oder der Position der nachgeschleppten Achse vorgesehen ist, die einen Nachführaktuator ansteuert, der die Bilderfassungseinrichtung entsprechend der ermittelten Schleppkurve und/oder Position nachführt. Mit einer solchen Einrichtung können insbesondere enge Kurven durch lange, mehrgliedrige Fahrzeuge, sicherer befahren werden und können Beschädigungen am Fahrzeug und an Objekten sicherer vermieden werden, da der Fahrer die gesamte Seite seines Fahrzeugs auf der Innenseite der Kurve oder zumindest den Bereich um die letzte nachgeschleppte Achse ständig einsehen kann.

Bei einer besonders bevorzugten Ausführungsform kann die Bilderfassungseinrichtung als schwenkbare oder verfahrbare Kamera ausgebildet sein. Die Bilderfassungseinrichtung kann beispielsweise auf einem Schlitten entlang einer Führungsschiene verfahrbar sein. Der Schlitten bzw. ein den Schlitten antreibender Aktuator ist in diesem Fall durch die Steuereinrichtung steuerbar. Alternativ kann ein Schwenkaktuator von der Steuereinrichtung angesteuert sein, der die Bilderfassungseinrichtung entsprechend der ermittelten Schleppkurve verschwenkt und dadurch den Blickwinkel der Bilderfassungseinrichtung nachführt und nachjustiert.

Vorteilhafterweise ist die Anzeigeeinrichtung im Sichtbereich des Fahrers, insbesondere in der Fahrerkabine, angeordnet. Dadurch ist sie vom Fahrer immer einsehbar. Es ist denkbar, die Anzeigeeinrichtung, die als Monitor ausgebildet sein kann, so anzuordnen, dass der Fahrer sie beim Blick auf den Rückspiegel automatisch mit erfasst. Insbesondere kann für jede Seite des Fahrzeugs eine Anzeigeeinrichtung vorgesehen sein.

Auf besonders einfache Art und Weise kann die Position und/oder die Schleppkurve ermittelt werden, wenn zumindest ein Drehwinkelsensor an einem Drehpunkt zwischen dem ziehenden Fahrzeugteil und dem nachgeschleppten Fahrzeugteil und/oder an einem Drehschemel des nachgeschleppten Fahrzeugteils angeordnet ist, der mit der Steuereinrichtung verbunden ist. Unter Berücksichtigung des Abstands von nachgeschleppter Achse zu dem Drehpunkt zwischen ziehendem und gezogenem Fahrzeugteil und des Abstands von der Bilderfassungseinrichtung zu dem Drehpunkt und in Kenntnis des Blickwinkels der Bilderfassungseinrichtung, kann mit dem ermittelten Drehwinkel die notwendige Nachführung der Bilderfassungseinrichtung bestimmt werden.

Wenn der ziehende Fahrzeugteil einen Lenkwinkelsensor und einen Wegstreckenzähler aufweist, kann aus den ermittelten Werten die Schleppkurve ermittelt werden und kann die Bilderfassungseinrichtung so nachgeführt werden, dass je nach Blickwinkel der Bilderfassungseinrichtung der gesamte das nachgeschleppte Fahrzeugteil umgebende seitliche Bereich auf der Kurveninnenseite, also auch der alle nachgeschleppte Achsen umgebende Bereich oder zumindest der Umgebungsbereich der letzten nachgeschleppten Achse und damit deren Fahrweg erfasst wird.

Vorzugsweise sind die eine oder mehrere Bilderfassungseinrichtungen im Bereich der seitlichen Rückspiegel des ziehenden Fahrzeugteils angeordnet. Diese Anordnung ermöglicht, einen möglichst großen Seitenbereich des Fahrzeugs zu erfassen.

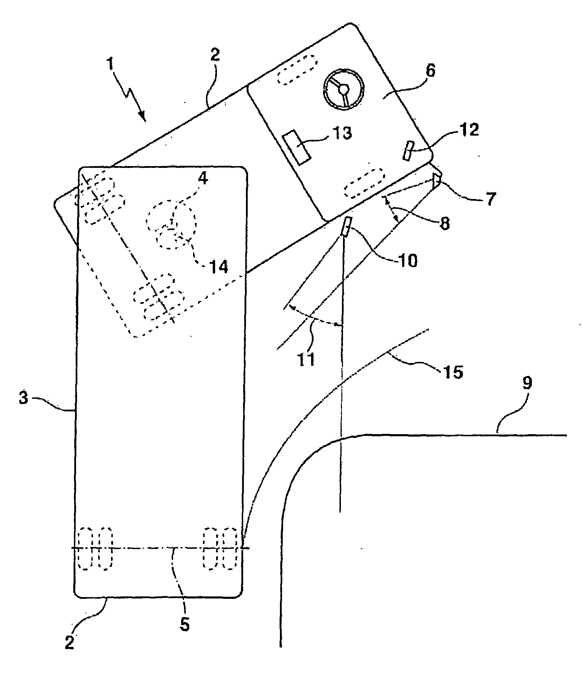

Weitere Merkmale und Vorteile der Erfindung ergeben sich aus der nachfolgenden Beschreibung eines Ausführungsbeispiels der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Ausführungsbeispiele der Erfindung werden anhand einer Zeichnung näher erläutert. Dabei zeigt die einzige Figur eine schematische Draufsicht auf ein Fahrzeug bei einer Kurvenfahrt.

In der **Figur** ist ein Fahrzeug **1** dargestellt, das einen als Sattelschlepper ausgebildeten ziehenden Fahrzeugteil **2** und einen als Sattelauflieger ausgebildeten nachgeschleppten Fahrzeugteil **3** umfasst. Der nachgeschleppte Fahrzeugteil 3 ist mit dem ziehenden Fahrzeugteil 2 an dem Drehpunkt **4** schwenkbar verbunden. An seinem Ende weist der Fahrzeugteil 3 eine nachgeschleppte Achse **5** auf. Seitlich an der Fahrerkabine **6** ist ein Rückspiegel **7** vorgesehen, der den Blickwinkel **8** aufweist. Der Fahrweg und damit der Umgebungsbereich der Achse 5 sowie Objekte oder Hindernisse auf dem Weg der Räder der Achse 5 auf der Kurveninnenseite liegen außerhalb des Blickwinkels 8. Insbesondere die Bordsteinkante **9** kann vom Fahrer über den Rückspiegel 7 nicht gesehen werden. Daher ist an der Seite der Fahrerkabine 6 eine als Kamera ausgebildete schwenkbare Bilderfassungseinrichtung **10** angeordnet, die einen Blickwinkel **11** aufweist. Die von der Bilderfassungseinrichtung 10 erfassten Bilder werden dem Fahrer über eine als Monitor ausgebildete Anzeigeeinrichtung **12** in der Fahrerkabine 6 angezeigt. Damit die Bilderfassungseinrichtung 10 stets den Fahrweg der nachgeschleppten Achse 5 erfasst und somit auf dem Weg der Achse 5 liegende Hindernisse stets erkannt werden können, wird die Bilderfassungseinrichtung 10 je nach Verschwenkung des ziehenden Fahrzeugteils 2 gegenüber dem nachgeschleppten Fahrzeugteil 3 nachgeführt. Der Grad der Nachführung wird im Ausführungsbeispiel durch eine Steuereinrichtung **13** bestimmt, die einen Schwenkaktuator der Bilderfassungseinrichtung 10 ansteuert. Die Steuereinrichtung 13 ermittelt aus dem durch einen Drehwinkelsensor **14** am Drehpunkt 4 ermittelten Drehwinkel die Schleppkurve **15** und/oder die Lage der Achse 5. Aus der Schleppkurve 15 bzw. der Lage der Achse 5 ergibt sich der Grad der Nachführung der Bilderfassungseinrichtung. Die Steuereinrichtung 13 gibt daher ein entsprechendes Steuersignal an den Aktuator der Bilderfassungseinrichtung 10. Aus der Figur ist ersichtlich, dass die Schleppkurve 15 und damit der im Wesentlichen der Schleppkurve 15 entsprechende Fahrweg im Blickwinkel 11 der Bilderfassungseinrichtung 10 liegt. Die Bilderfassungseinrichtung 10 erfasst somit die Achse 5, bzw. deren Räder auf der rechten Fahrzeugseite, den nachgeschleppten Fahrzeugteil 3 und den Umgebungsbereich, der rechts seitlich von dem Fahrzeugteil 3 liegt.

## Patentansprüche

1. Verfahren zur Anzeige des Fahrwegs einer von einem ziehenden Fahrzeugteil (2) eines Fahrzeugs (1) nachgeschleppten Achse (5) eines nachgeschleppten Fahrzeugteils (3) bei einer Kurvenfahrt des Fahrzeugs (1), bei dem der Blickwinkel (11) einer Bilderfassungseinrichtung (10) nachgeführt und das erfasste Bild dem Fahrer angezeigt wird,
**dadurch gekennzeichnet,**
**dass** die Position und/oder die Schleppkurve (15) der nachgeschleppten Achse (5) ermittelt wird, daraus die notwendige Nachführung des Blickwinkels (11) der Bilderfassungseinrichtung (10) zur Erfassung des Fahrwegs der nachgeschleppten Achse (5) ermittelt und der Blickwinkel (11) entsprechend nachgeführt wird.

2. Verfahren nach Anspruch 1,
**dadurch gekennzeichnet,**
**dass** zur Nachführung des Blickwinkels (11) die Bilderfassungseinrichtung (10) verfahren oder verschwenkt wird.

3. Verfahren nach einem der vorhergehenden Ansprüche,
**dadurch gekennzeichnet,**
**dass** die Schleppkurve (15) und/oder die Position aus dem Lenkwinkel und dem zurück gelegten Weg des ziehenden Fahrzeugteils (2) ermittelt wird.

4. Verfahren nach einem der vorhergehenden Ansprüche,
**dadurch gekennzeichnet,**
**dass** mindestens ein Drehwinkel erfasst wird, der die Verdrehung des die nachgeschleppte Achse (5) aufweisenden Fahrzeugteils gegenüber dem ziehenden Fahrzeugteil (3) angibt, und daraus die Schleppkurve und/oder die Position der nachgeschleppten Achse (5) ermittelt wird.

5. Einrichtung zur Darstellung des Fahrwegs einer nachgeschleppten Achse (5) eines durch einen ziehenden Fahrzeugteil (2) nachgeschleppten Fahrzeugteils (3), umfassend eine nachführbare Bilderfassungseinrichtung (10) und eine damit verbundene Anzeigeeinrichtung (12),
**dadurch gekennzeichnet,**
**dass** eine Steuereinrichtung (13) zum Ermitteln einer Schleppkurve (15) und/oder der Position der nachgeschleppten Achse (5) vorgesehen ist, die einen Nachführaktuator ansteuert, der die Bilderfassungseinrichtung (10) entsprechend der ermittelten Schleppkurve und/oder Position nachführt.

6. Einrichtung nach Anspruch 5,
**dadurch gekennzeichnet,**
**dass** die Bilderfassungseinrichtung (10) als schwenkbare oder verfahrbare Kamera ausgebildet ist.

7. Einrichtung nach einem der Ansprüche 5 oder 6,
**dadurch gekennzeichnet,**
**dass** die Anzeigeeinrichtung (12) im Sichtbereich des Fahrers, insbesondere in der Fahrerkabine (6), angeordnet ist.

8. Einrichtung nach einem der Ansprüche 5 bis 7,
**dadurch gekennzeichnet,**
**dass** zumindest ein Drehwinkelsensor (14) an einem Drehpunkt (4) zwischen dem ziehenden Fahrzeugteil (2) und dem nachgeschleppten Fahrzeugteil (3) und/oder an einem Drehschemel des nachgeschleppten Fahrzeugteils (3) angeordnet ist, der mit der Steuereinrichtung (13) verbunden ist.

9. Einrichtung nach einem der Ansprüche 5 bis 8,
**dadurch gekennzeichnet,**
**dass** der ziehende Fahrzeugteil (2) einen Lenkwinkelsensor und einen Wegstreckenzähler aufweist.

10. Einrichtung nach einem der Ansprüche 5 bis 9, **dadurch gekennzeichnet,**
**dass** eine oder mehrere Bilderfassungseinrichtungen (10) im Bereich der seitlichen Rückspiegel (7) des ziehenden Fahrzeugteils (2) angeordnet sind.
